# EUROPÄISCHE PATENTANMELDUNG

(11) **EP 1 041 215 A2**
(43) Veröffentlichungstag der Anmeldung: **04.10.2000**
(21) Anmeldenummer: 00103607.8
(22) Anmeldetag: 21.02.2000
(51) Int. Cl.: E04D 5/10, E04D 13/14

(54) **Plastisch verformbares Abdeckmaterial**

(30) Priorität: 27.03.1999 DE 29905698 U; 13.08.1999 DE 29914210 U
(71) Anmelder: Fleck, Oskar, D-45711 Datteln (DE)
(72) Erfinder: Fleck, Oskar, D-45711 Datteln (DE)
(74) Vertreter: Hoffmeister, Helmut, Dr. Dipl.-Phys.

(57) **Zusammenfassung**

Die Erfindung betrifft ein plastisch verformbares Abdeckmaterial, insbesondere für den Außenbereich von Bauwerken, in Bogen-, Bahn- oder Streifenform, bestehend aus
- einem abdeckenden Abschlußelement(2),
- einer selbstklebenden und verformbaren Schicht (3) aus einem Haftklebemittel auf Butylkautschukbasis, das auf einer Seite (2a) des Abschlußelements (2) angeordnet ist, und
- einer Schutzfolie (6.1, 6.5), mit der eine Kontaktebene (4) der Schicht (3) abgedeckt ist.

## Beschreibung

Die Erfindung betrifft ein plastisch verformbares Abdeckmaterial, insbesondere für den Außenbereich von Bauwerken, in Bogen-, Bahn- oder Streifenform, bestehend aus
einem abdeckenden Abschlußelement
einer selbstklebenden und verformbaren Schicht aus einem Haftklebemittel auf Butylkautschukbasis, das auf einer Seite des Abschlußelements angeordnet ist, und
   einer Schutzfolie, mit der eine Kontaktebene der Schicht abgedeckt ist.

Ein Abdeckmaterial der eingangs genannten Art ist aus der DE 298 06 536 U1 bekannt. Auf ein Trägermaterial wird auf einer Seite eine selbstklebende Schicht aufgebracht, auf der ein abziehbarer Abdeckstreifen aufgebracht ist. Das Trägermaterial ist in Längs- und in Querrichtung dehnbar. Das Trägermaterial ist mehrschichtig ausgebildet. Als innere Schicht ist eine elastische und flexible Trägerfolie vorgesehen. Die äußeren Schichten des Trägermaterials werden von mit der Trägerfolie verbundenen Vliesbahnen gebildet, die in Längsrichtung verlaufende Hohlräume ausbilden. Die selbstklebende Schicht auf der Basis von Butylkautschuk oder aus mit Polyolefinen modifizierten Bitumen wird auf eine der Vliesbahnen aufgebracht. Die Abdeckstreifen bestehen aus einem silikonisierten Papier, das vor dem Verkleben abgezogen wird.

Nachteilig ist, daß die Elastizität des Trägermaterials durch die Elastizität seiner Schichten begrenzt wird. Wird die geringste Elastizität einer der Schichten überschritten, zieht das Trägermaterial die selbstklebende Schicht von einer Fläche als Unterlage wieder ab. Das ist insbesondere dann der Fall, wenn mit dem Abdeckmaterial Spalte zwischen einem Schornstein und einem mit Dacheindeckungsplatten eingedeckten Dach abzudichten sind. Ein weiterer sehr wesenticher Nachteil ist, daß das Abdeckmaterial in seinem Aufbau sehr schwer handhabbar ist. Steht ein Dachdecker nach abgezogener Schutzfolie auf der Dachdeckerleiter vor dem Schornstein, insbesondere im Bereich der Schornsteinkehle, klebt die selbstklebende Schicht durch Windeinflüsse und dgl. fast unlösbar an seinem Körper, an seinen Händen und sonst überall, nur nicht dort, wo sie eigentlich hin gehört.

Ein Abdeckmaterial ist weiterhin aus der DE 36 42 063 A1 bekannt. Es weist ein Metallelement aus einem Streckmetallgitter auf, welches im anwendungstechnisch relevanten Temperaturbereich in eine nichtklebende Masse aus Polyisobutylen-Substrat eingebettet ist. Dabei soll das eingebettete Streckmetallgitter in Längsrichtung eine Dehnbarkeit von 50 % bis 150 %, in Querrichtung eine Dehnbarkeit ≤ 20 % und ein Rückstellvermögen ≤ 5 % aufweisen. Diesen Werten der Dehnbarkeit sind jedoch entgegen den Zahlenangaben dadurch Grenzen gesetzt, daß das in den Öffnungen des Streckmetallgitters eingedrungene Polyisobutylen-Substrat der vorgenannten Dehnbarkeit entgegenwirkt, so daß von diesen Werten allenfalls ein Bruchteil erreichbar ist und daß auch nur mittels entsprechender Streckwerkzeuge. Der Grund beruht vor allem darin, daß das in den Öffnungen des Streckmetallgitters eingedrungene Polyisobutylen-Substrat bei einer Streckung des Streckmetallgitters wie eine Feder vorgespannt wird und bei Nachlassen der äußeren Verformungskräfte die dann freiwerdenden Federvorspannungskräfte des Polyisobutylens zu einem sehr hohen Rückstellvermögen führen.

Die DE 298 19 378 U1 beschreibt einen Abdeckstreifen, der aus einer Bahn aus Glasfasergewebe und zwei an ihren Längsseiten angeordneten Seitenstreifen aus Aluminium besteht, die nach außen hin gewellt sind. Für eine Verbindung mit den Abdeckplatten eines Dachs sorgen an den Klebeschichten aus Butyl, die an den Unterseiten der Aluminiumseitenstreifen aufgebracht sind.

Nachteilig ist, daß die Verformbarkeit des Abdeckstreifens durch die Materialien Glasfasergewebe und gewelltes Aluminiumblech begrenzt ist. Außerdem werden die Butylstreifen lediglich für Klebezwecke des lediglich zum Bedecken und Abdichten von Firsten und Graten an Dächern verwendbaren Abdeckstreifens eingesetzt.

Die EP 0 038 222 A2 und die WO 95 28 536 A1 geben ein- bzw. mehrschichtige Abdeckstreifen aus Metall an, die in Längsrichtung mäanderförmig gewellt sind. Weitere wellenförmige Verformungen in Querrichtungen sollen ein Ziehen bzw. Stauchen des Abdeckstreifens erleichtern. Eingesetzt werden Aluminiumbleche zwischen 0,05 und 0,4 mm. Auch wenn Klebestoffe eingesetzt werden, ist dieser Metallabdeckstreifen immer noch so steif, daß er nur glatte Dachflächen abdecken kann.

Aus der DE-PS 29 22 242 ist ein gattungsfremdes Abdeckmaterial bekannt geworden, das einerseits von einer wasserdichten, biegbaren Abdeckfolie mit mindestens einer Schicht aus mit einem Kautschukanteil modifizierten Bitumen und mit einem Verstärkungselement aus synthetischen, miteinander verbundenen Fasern besteht. Als Fasern sind darin beispielsweise Polyamidfasern und Polyesterfasern genannt. Die daraus hergestellte Maschenware soll eine hohe Dehnbarkeit von mehr als 100 % in sämtlichen Richtungen aufweisen. Der Kautschukanteil des bekannten Substrats kann etwa 30 bis 95 Gew.-% der gesamten Masse ausmachen und aus Polyisobutylen bestehen. Dabei erhöhen die Polyamidfasern und die Polyesterfasern zwar die Reißfestigkeit eines derartigen Abdeckmaterials, leisten jedoch zu einem verminderten - da unerwünschten - Rückstellvermögen keinen nennenswerten Beitrag. Aus diesem Grunde ist das Rückstellvermögen dieses Abdeckmaterials durch die Summe des Rückstellvermögens der einzelnen Komponenten gekennzeichnet, die relativ hoch sind.

In der DE-PS 22 25 358 ist ein vorgefertigtes, bogen- oder bahnenförmiges Abdeckmaterial offenbart, welches auf der einen Seite mit einer Abdeckschicht aus einer Bitumen-/Kautschukmasse mit nichtklebender Oberfläche versehen und auf der anderen Seite eine selbstklebende Bitumen-/Kautschukschicht aufweist. Zwischen beiden Schichten ist eine Verstärkungsschicht eingelagert, die beispielsweise aus einer gestreckten oder perforierten Metallschicht besteht. Diese Metallschicht steht einem Dehnvermögen hinderlich im Wege, weil es in vielen Richtungen gegenüber der gewünschten Dehnfähigkeit eine relativ starre Armierung bildet.

Ausgehend von diesem Stand der Technik liegt der Erfindung die Aufgabe zugrunde, ein von Hand plastisch verformbares Abdeckmaterial der eingangs genannten Gattung zu schaffen, das selbst von Hand bei tiefen Außentemperaturen eine hohe Dehnfähigkeit aufweist, in räumlichen Ebenen verformbar ist und bei vernachlässigbar geringen Rückstellkräften direkt und ohne zusätzliche Hilfsmittel an den Kontaktflächen leicht befestigt werden kann.

Erfindungsgemäß wird diese Aufgabe durch die Merkmale des Anspruchs 1 gelöst.

Die mit der Erfindung erzielten Vorteile bestehen insbesondere darin, daß durch die nebeneinanderliegenden Schutzfolienbahnen das flächige Auftragen des festelastischen Einkomponenten-Kleb/Dichtstoffs und darüber das Auflegen des Stretchfolienelements fertigungstechnischnisch erst möglich wird. Durch die einzeln abziehbaren Schutzfolienbahnen wird darüber hinaus nur der Kontaktebene freigelegt, die auf der Bauwerksfläche aufgeklebt werden soll. Ist diese Bauwerksfläche der Bereich zwischen Schornstein und Dacheindeckungspatten eines Dachs, kann zuerst die im wesentlichen glatte Schornsteinfläche beklebt werden. In dieser Phase überdecken die anderen Schutzfolienbahnen den Rest der Kontaktebene, so daß der Dachdecker frei und ohne Behinderungen auf dem Dach mit diesem Teil des Abdeckmaterials hantieren kann. Werden die restlichen Schutzfolienbahnen abgezogen, liegt die restliche Kontaktebene auf den obersten Flächenteilen der Reliefs der Dacheindeckungsplatten. Das Stretchfolienelement erlaubt es, die Einkomponenten-Kleb/Dichtstoffschicht überall und vor allem auf den Dacheindeckungsplatten-Flächen abdichtend anzudrücken. Da das Stretchfolienelement rückstellungsfrei in der beim Andrücken eingenommenen Lage verbleibt, wird die Kontaktebene nicht von den Bauwerksflächen gelöst.

Ein derartig plastisch verformbares Abdeckmaterial kann eine Dehnfähigkeit von über 100 % bei einem vernachlässigbar geringem Rückstellvermögen aufweisen, weil nunmehr das Stretchfolienelement nach seiner Streckung auf die von der festplastischen Einkomponenten-Kleb/Dichtstoffschicht ausgehenden Rückstellkräfte keine zusätzliche ausübt, da eine einmal vorgenommene Dehnung des Stretchfolienelementes keine Rückstellkräfte erzeugt, die zum Zurückziehen der festplastischen Einkomponenten-Kleb/Dichtstoffschicht führen kann. Weiterhin ist eine unglaublich einfache Verformung und Anpaßbarkeit von Hand an die jeweilige Einsatzfläche gewährleistet. Dieses Abdeckmaterial kommt daher ausgezeichnet zur Abdeckung und Abdichtung von Bauwerksspalten, beispielsweise zwischen den Außenwänden eines Kamins und den angrenzenden Dacheindeckungsplatten oder zwischen den Rahmen von Dachfenstern und den angrenzenden Dacheindeckungsplatten in Frage. Darüber hinaus ist der Einkomponenten-Kleb/Dichtstoff auf Butylkautschukbasis selbst bei einer Gebrauchstemperatur zwischen -40 und +80° gebrauchsfähig und daher bei jeder in Frage kommenden Arbeitstemperatur zu verwenden.

Nach dem Lösen der Schutzfolienbahn bzw. - bahnen von der Kontaktebene kann das plastisch verformte Abdeckmaterial direkt von Hand gegen die Einsatzfläche gedruckt werden, wodurch infolge seiner Selbstklebung eine unmittelbare Verbindung mit den unterschiedlichen aus Stein, Holz, Kunststoff oder Metall bestehenden Einsatzflächen hergestellt wird. Diese Verbindung ist wasserdicht und gegenüber den in Frage kommenden Temperaturwechselbelastungen dauerhaft haltbar.

Die Dicke des Abdeckmaterials und des Stretchfolienelements sind bei ein und demselben Abdeckmaterial je für sich stets konstant. Sie können jedoch von Abdeckmaterial zu Abdeckmaterial höchst unterschiedlich gestaltet werden. So kann das Stretchfolienelement eine Dicke von etwa 0,05 mm bis etwa 1,5 mm aufweisen.

Die Innenseite des Stretchfolienelements ist vorteilhaft von wenigstens einer seiner Außenkanten bis zu einer Breite von je 0,01 bis 0,5 mm von dem Einkomponenten-Kleb/Dichtstoff freigehalten, so daß nach dem Lösen der Schutzfolie von der Kontaktebene eine selbstklebende, d. h. eine von dem Einkomponenten-Kleb/Dichtstoff freigehaltene Außenfläche des Stretchfolienelementes sichergestellt ist. Falls nämlich der Einkomponenten-Kleb/Dichtstoff bis zu den beiden Außenkanten des Stretchfolienelements reichen sollte, kann beim Anpressen der Kontaktfläche an die Einsatzfläche ein Überquellen des Einkomponenten-Kleb/Dichtstoffes von der Innenseite auf die Außenseite oder die Kanten erfolgen, was ein Andrücken des Abdeckmaterials wegen der dann klebrigen Finger des Benutzers erschweren kann. Zugeschnittene Außenkanten sind so schmal und dem Dachdecker bewußt, daß sie zu keinen Erschwernissen führen.

Nach einer besonders vorteilhaften Weiterbildung der Erfindung sind die Dicke und die Dehnbarkeit des Stretchfolienelements derart auf die Zähigkeit des EinkomponentenKleb/Dichtstoffes abgestimmt, daß das Abdeckmaterial von Hand werkzeuglos dehnbar, biegbar sowie der jeweiligen Kontur der Einsatzfläche durch sonstige Verformung anpaßbar ist.

Um das plastisch verformbare Abdeckmaterial problemlos in Bahn- oder Streifenform aufrollen oder in Bogenform aufeinander stapeln zu können, wird die Schutzfolienbahnen zur Abdekkung der Kontaktebene des Einkomponenten-Kleb/Dichtstoffes von einem silikonbeschichtiten Papier oder einer Kunststoffolie gebildet, welche wenigstens eine der Außenkanten des Stretchfolienelementes zur Abdeckung sowie zur Erleichterung beim Abziehen geringfügig überragen. Erst nach der Formgebung des Abdeckmaterials in seine endgültige Form durch Zuschneiden oder dgl. kann die Schutzfolie von der Innenseite abgenommen, kurz bevor das geformte Abdeckmaterial mit seinen Kontaktebenen von Hand gegen die Einsatzflächen gedrückt wird.

Die Schutzfolienbahnen können eine Breite zwischen 1 cm und 10 cm haben. Die Papierbahnen können vorteilhafterweise eine Breite von 6,5 cm haben, die von Rollen abgezogen werden können, so daß fünf überlappende Bahnen eine Breite 30 cm ergeben können. Auf die Silikonbeschichtungen kann die Kleb-Dichtstoffschicht aufgebracht werden.

Als besonders vorteilhaft hat sich für den Einkomponenten-Kleb/Dichtstoff auf Butylkautschukbasis ein solches bewährt, der unter der Handelsmarke "Terostat-81" bekannt geworden ist und folgende technische Daten aufweist:
Farbe: schwarz
Konsistenz: zäh-plastisch, klebend, weich
Dichte bei 20° C: ca. 1,26 g/cm³
Festkörpergehalt: 100 %
Penetration: ca. 65 1/10 mm
   (bei einem Konus 150 g; 6 s; 20° C)
Klebkraft: sehr stark
Lackverfärbung: keine
Gebrauchstemperatur: -40° C bis +80° C
Temperaturstabilität: 200° C
   (kurzfristig bis 1 h).

Schließlich kann nach einem besonders vorteilhaften Merkmal der Erfindung die Außenseite des Stretchfolienelements mit einer der Umgebungsfarbe des Einsatzbereiches entsprechenden Farbe bestrichen werden, so daß sich das plastisch verformbare Abdeckmaterial auch optisch problemlos den Erfordernissen anpassen läßt. Das Stretchfolienelement ist im wesentlichen durchscheinend. Es kann aber auch entsprechend eingefärbt sein.

Ein Ausführungsbeispiel der Erfindung ist in der Zeichnung dargestellt und wird im folgenden näher beschrieben. Es zeigen
- Fig. 1: ein Streifen des erfindungsgemäßen Abdeckmaterials in einer schematischen perspektivischen Darstellung,
- Fig. 2: ein Abdeckmaterial gemäß Fig. 1 in einer auseinandergezogenen perspektivischen schematischen Darstellung,

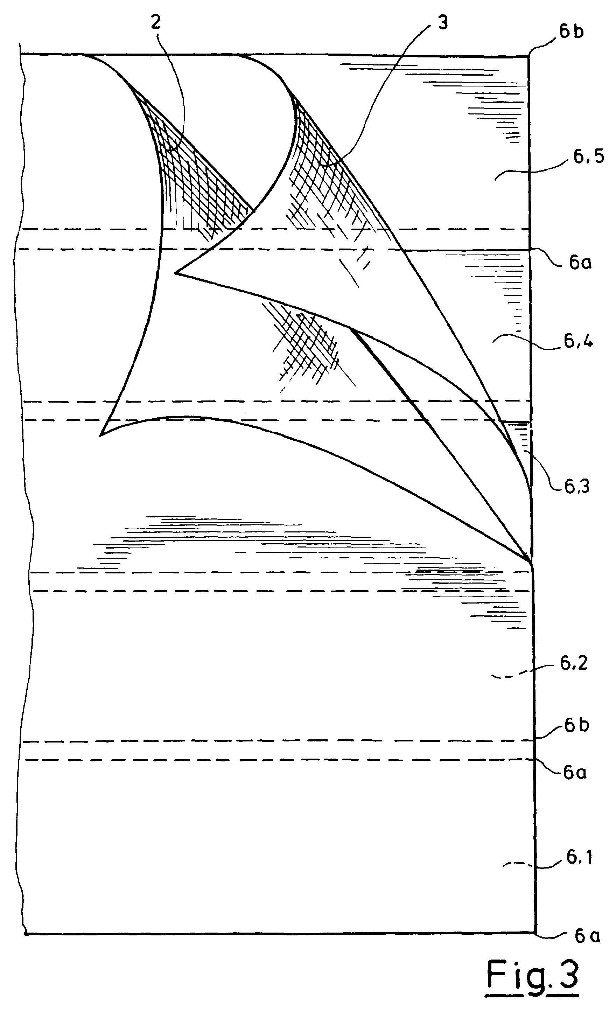

- Fig. 3: ein Abdeckmaterial gemäß den Fig. 1 und 2 in einer teilweise auseinandergezogenen schematischen perspektivischen Darstellung,
- Fig. 4: ein Abdeckmaterial gemäß den Fig. 1 bis 3 in einer auseinander gezogene schematischen perspektivischen Darstellung,
- Fig. 5: eine perspektivische Teilansicht auf einen Dachfensterrahmen mit dem angesetzten Abdeckmaterial,
- Fig. 6: eine perspektivische Teilansicht eines Daches mit Kamin und dessen entsprechender Abdichtung seiner Durchdringungsflächen mit dem neuen Abdeckmaterial und
- Fig. 7 bis 12: Verarbeitungsschritte bei einer Herstellung einer Abdichtung gemäß Fig. 6 mit einem Abdeckmaterial gemäß Fig. 1 bis 4.

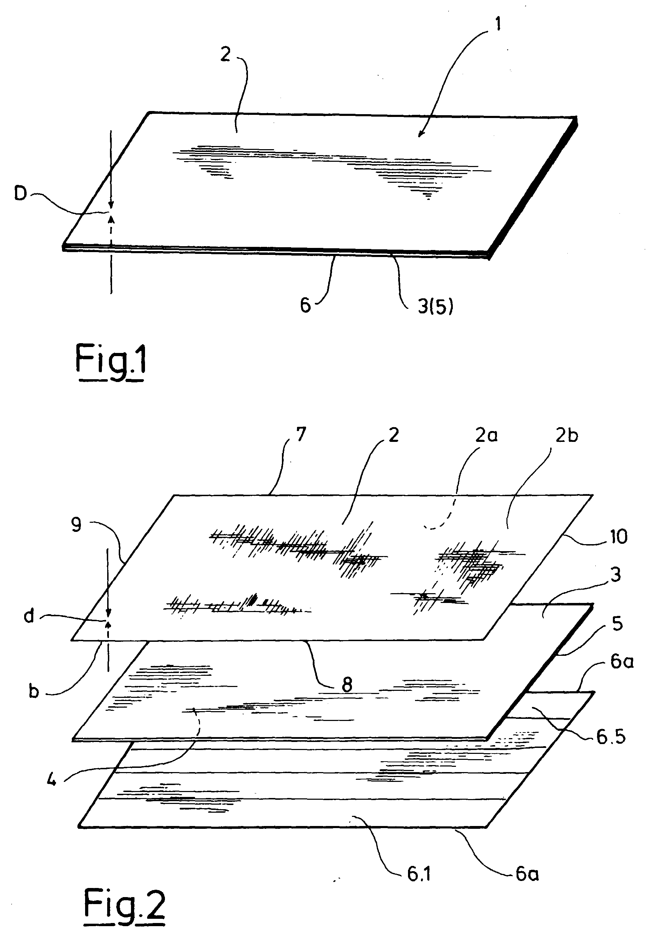

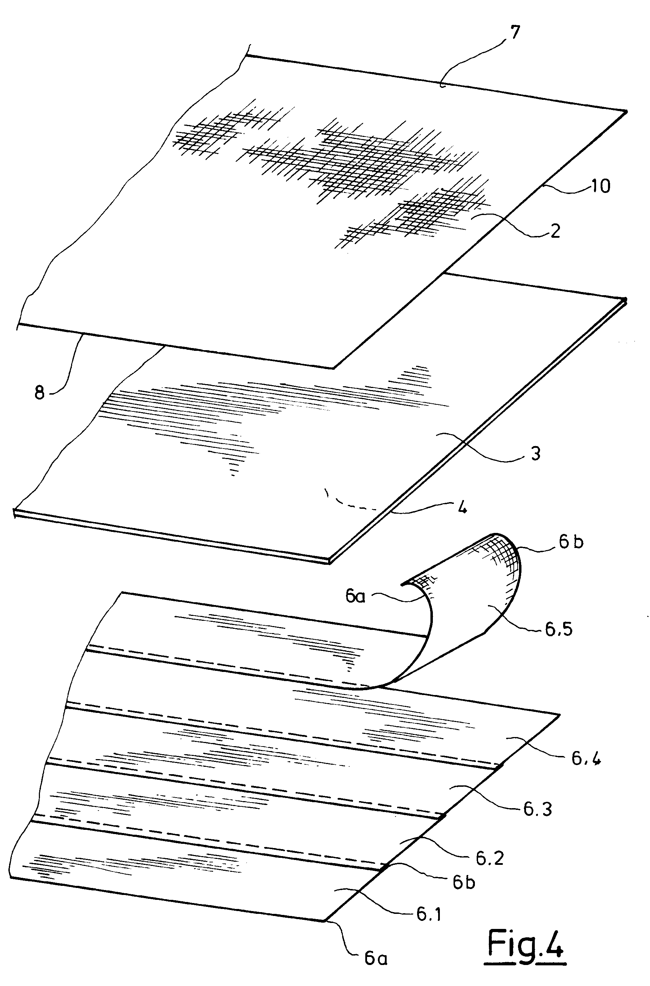

Gemäß den Fig. 1 und 4 besteht das neue Abdeckmaterial 1 aus
einem Stretchfolienelement 2, dessen Innenseite 2a von
einer festplastischen Einkomponenten-Kleb/Dichtstoffschicht 3 auf Butylkautschukbasis vollständig oder teilweise derart von
einer Schicht 5 überdeckt ist, daß
eine selbstklebende Kontaktebene 4 entsteht, die von Schutzfolienbahnen 6.1, 6.2, 6.3, 6.4 und 6.5 abgedeckt ist.
   Wie die Fig. 1 und 2 zeigen, hat das Abdeckmaterial 1 eine Dicke D, die aus einer
einer Dicke d des Stretchfolienelements 2,
einer Dicke der Schicht 3 und
einer Dicke der Bahnen 6.1, ..., 6.5 zusammensetzt.

Die Schutzfolienbahnen 6.1, ..., 6.5 sind aus einem silikonbeschichteten Papier und haben eine Breite vom Rand 6a bis zum Rand 6b von 6,5 cm und eine Dicke zwischen 100 und 200 g/m2. Eingesetzt wird ein Papier von 165 g pro Qwadratmeter. Die Silikonbeschichtung hat eine Dicke von 0,7 µm.

Als Einkomponenten- Kleb/Dichtstoff auf Butylkautschukbasis kommt TEROSTAT zum Einsatz, das folgende technischen Daten aufweist:
Farbe: schwarz
Konsistens: zäh-plastisch, klebend, weich
Dichte bei 20° C: ca 1,26 g/cm3
Festkörpergehalt: 100%
Penetration: ca. 65 1/10 mm
   (Konus 150 g; 6 s; 20° C)
Klebekraft: sehr stark
Lackverfärbung: keine
Gebrauchtemperatur: -40° c bis +80 ° C
Temeraturstabilität: 200° C
   (kurzfristig bis 1 h).

Es sei an dieser Stelle darauf hingewiesen, das auch andere Kleb/Dichtstoffe mit gleichen oder ähnlichen Eigenschaften einsetzbar sind.

Bei der Herstellung des Abdeckmaterials 1 werden die fünf Bahnen 6.1, .. nebenenanderliegend und sich teilweise überlappend (vgl. Fig.4) von Rollen (nicht dargestellt) abgezogen. Die Bahnen ergeben so eine Breite von 30 cm. Auf die Silikonschichten wird die Einkomponenten-Kleb/Dichtstoffschicht 3 aufgetragen. Durch die Abzugsgeschwindigkeit der Schutzfolienbahnen 6.1, ... kann Dicke der Schicht 3 eingestellt werden. Auf die Schicht 3 wird dann das Strechfolienelement 2 in spannungsfreiem Zustand aufgelegt. Diese Herstellungsart hat den Vorteil, daß die Verarbeitungseigenschaften des Abdeckmaterials 1 am Prozeßende voll zur Geltung kommen können. Wäre anstelle der Bahnen 6.1,.. das Stretchfolienelement der unterste Teil bei der Herstellung, könnte es wenigstens teilweise in seinen Endzustand gereckt und das Abdeckmaterial 1 damit wertlos werden.

Auf der Außenseite 2b kann das Stretchfolienelement 2 mit einer der Umgebungsfarbe des Einsatzbereiches entsprechenden Farbe eingefärbt bzw. überstrichen werden.

Das Abdeckelement 1 kann an seinen Außenkanten 7 bis 10, insbesondere an den Außenkanten 9, 10 auseinandergezogen werden. Die Stretchfolie macht dieses Auseinanderziehen problemlos mit und bewirkt durch seine fehlenden Rückstellkräfte, daß der Abdeckstreifen 1 nicht zusammengerollt wird, weil die Abdeckfolie 1 sich zusammenzieht. Vielmehr nimmt das Stretchfolienelement 2 die Zustandsendform ein, die auch der Einkomponenten-Kleb/Dichtstoff 3 einnimmt. Hierbei ist der Einkomponenten-Kleb/Dichtstoff in einer -Schicht 3 einer entsprechenden Höhe überzogen, so daß das Abdeckmaterial 1 eine Gesamtdicke D aufweist.

Das Abdeckmaterial weist demnach je nach dessen Dicke D eine Dehnfähigkeit von weit über 100 % bei einem vernachlässigbaren Rückstellvermögen von 0,001 % auf. Dies rührt daher, daß das gestreckte Stretchfolienelement 2 unter den Dehnkräften seine Elastizität verliert und die geringen Rückstellkräfte der Einkomponenten-Kleb/Dichtstoffschicht 3 nicht ausreichen, das Abdeckmaterial 1 in seine ursprüngliche Form zurückzuführen.

Das Abdeckmaterial 1 kann (nicht dargestellt) in eine plessierte Form vorgeformt werden, die eine sinuskurvenähnliche Konfiguration hat. Die Maxima und die Minima der Kurve können dabei gerundet sein, können aber mehreckig, spitz oder dergleichen vorgeformt werden.

Hierdurch ist es möglich, bei voller Ausnutzung der Dichtfähigkeit das Abdeckmaterial optimal zu verarbeiten. Ist es erforderlich, kann das Abdeckmaterial auch schuppenförmig verformt und entsprechend verarbeitet werden.

Wird wenigstens eine der Schutzfolienbahnen 6.1,... abgezogen und der Einkomponenten-Kleb/Dichtstoff 3 auf eine Wandfläche oder einen anderen Untergrund gedruckt, klebt dieser fest und inniglich an dieser Grundfläche an.

Dabei macht sich die Dehnbarkeit des Stretchfolienelements 2 und die Zähigkeit der Einkomponenten-Kleb/Dehnstoffschicht 3 es möglich, daß das Abdeckmaterial 1 von Hand werkzeuglos dehnbar, biegbar sowie der jeweiligen Kontur der Einsatzfläche durch sonstige Verformung anpaßbar ist.

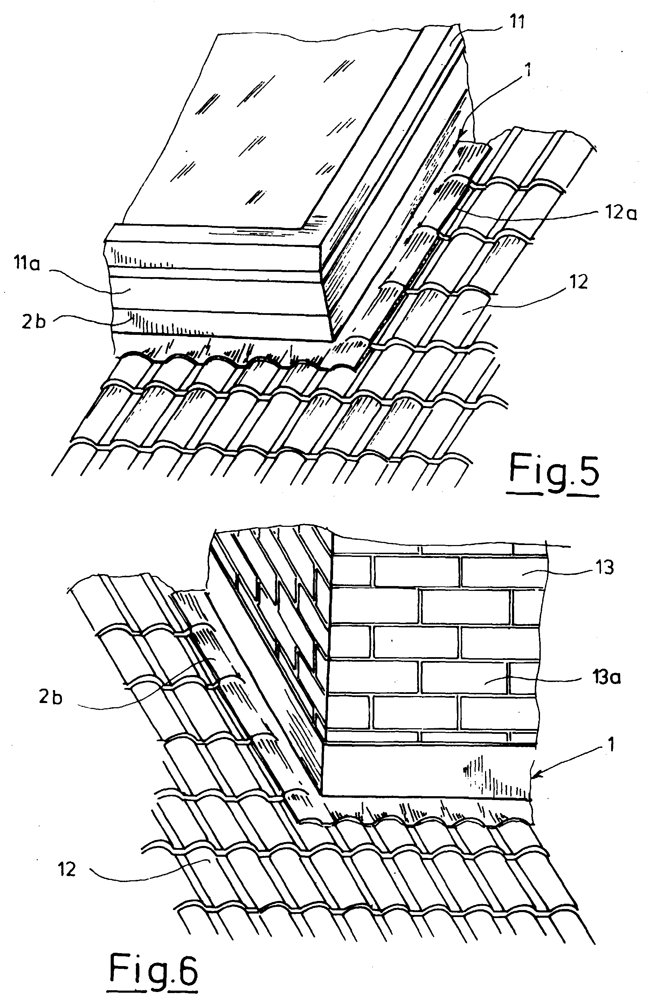

Der Einsatz des Abdeckmaterials, wie es im Ausführungsbeispiel beschrieben ist, wird anhand der Fig. 5 und 6 bis 12 näher erläutert.

Fig. 5 zeigt ein mit Dacheindeckungsplatten 12 eingedecktes Dach, in das ein Rahmen 11 eines Dachfensters eingesetzt ist. Mit 11a ist hierbei die Fläche des Dachrahmens 11 und mit 12a die Flächen der Eindeckungsplatten 12 bezeichnet. Zwischen der Fläche 11a des Dachrahmens 11 und der Fläche 12a der Dacheindeckungsplatten 12 ergibt sich ein Spalt.

Um diesen Spalt abzudichten, wird das zu einer Rolle aufgewickelte Abdeckungsmaterial 1 genommen und die Schutzfolien 6.1,... nacheinander abgezogen. Dadurch, daß die Ränder Schutzfolienbahnen an leicht über der Schicht 3 aus dem Einkomponenten-Kleb/Dichtstoff überstehen, lassen sich die Schutzfolie 6 leicht abziehen und geben somit die Einkomponenten- Kleb/Dichtstoffschicht 3 frei. Diese wird mit der Kontaktebene 4 wenigstens teilweise sowohl auf die Fläche 11a und wenigstens teilweise auf die Flächen 12a geklebt. Durch ein Andrücken mit der Hand läßt sich dabei das Abdeckmaterial gut auf dem unebenen Untergrund drücken und dichtet so einseitig und wirksam den zwischen den Flächen 11a und 12a bestehenden Spalt wasserdicht ab.

In Fig. 6 ist ein weiterer Einsatzfall gezeigt. Hierbei durchdringt ein Kamin 13 die Dachfläche 12. Mit 13a ist dabei die Fläche des Kamins 13 bezeichnet. Der zwischen dem Kamin 13 und der Fläche 12a des Daches 12 befindliche Spalt stellt hier eine mögliche Undichtigkeit dar, die mit dem Abdeckmaterial 1 dauerhaft beseitigt wird.

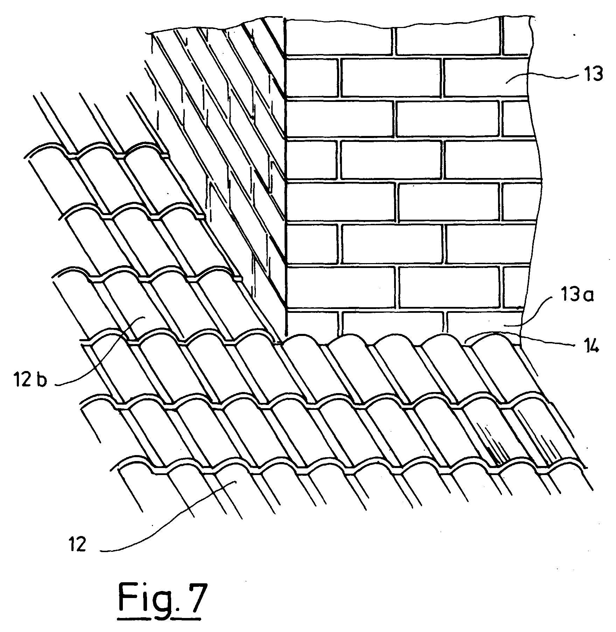

Die einzelnen Verarbeitungsschritte beim Verlegen des Abdeckmaterials werden unter Zuhilfenahme der Fig. 7 bis 12 im folgenden beschrieben:

Fig. 7 zeigt den Kamin, der unter Belassung des mit 14 bezeichneten Spalts aus dem mit Dacheindeckungsplatten 12 eingedeckten Dachs herausragt.

Von einer Rolle wird das Abdeckmaterial 1 abgezogen und zugeschnitten. Ab- und zugeschnitten wird ein Stück, das für das Verlegen der vorderen Fläche 13a des Kamins und der dieser Fläche gegenüberliegenden Dacheindeckungsplatten über den Spalt 14 bestimmt ist. Durch die fünf übereinanderliegenden Schutzfolienbahnen 6.1 ... ist das Abdeckmaterial verlegungstechnisch in zwei und drei Schutzfolienbahnen unterteilbar. Die drei oberen Schutzfolienbahnen 6.1 ... sind für die im wesentlichen glatte Fläche 13a des Kamins und die darunter liegenden drei für die Flächen 13a der Dacheindeckungsplatten 12 bestimmt, so daß ein Dachplattenabdeckungsstreifen 101 und ein Schornsteinabdeckungsstreifen 102 entstehen. Zwischen die beiden Streifen 101 und 102 werden jeweils von beiden Seiten Schnitte eingebracht, so daß Schornsteineckstreifenstücke 103 entstehen.

Das so zugeschnittene Abdeckmaterial 1 nimmt der Dachdecker in die Hand und zieht die beiden Schutzfolienbahnen von dem Schornsteinabdeckstreifen 102 und dem Schornsteineckstreifenstück 103 ab und drückt die freigegebene Kontaktebene 4 der Einkomponenten-Kleb-/Dichtstoffschicht 3 - im folgenden Schicht 3 - auf die Fläche 13a. Da die restlichen drei Folienbahnen den Dachplattenabdeckstreifen 103 noch überdecken, kann der Dachdecker das Abdeckmaterial 1 auf dem Dach gut händeln, ohne daß es an seinen Händen, an seinem Körper oder an anderen Gegenständen kleben bleibt. Vielmehr ist gesichert, daß der Schornsteinabdeckstreifen 102 gerade und lagegenau auf die Fläche 13a aufgeklebt wird. Durch ein flächiges Drücken auf das Stretchfolienelement 2 legt sich die freigelegte Kontaktebene 4 über alle Unebenheiten der Fläche 13a des Kamins.

Ist der Schornsteinabdeckstreifen 102 und der Schornsteineckstreifenstück 103 an der Fläche 13a angeklebt, werden anschließend die noch verbliebenen drei Schutzfolienbahnen von der Kontaktebene 4 der Schicht 3 gezogen und auf die Fläche 12a der Dacheindeckungsplatten 12 aufgeklebt.

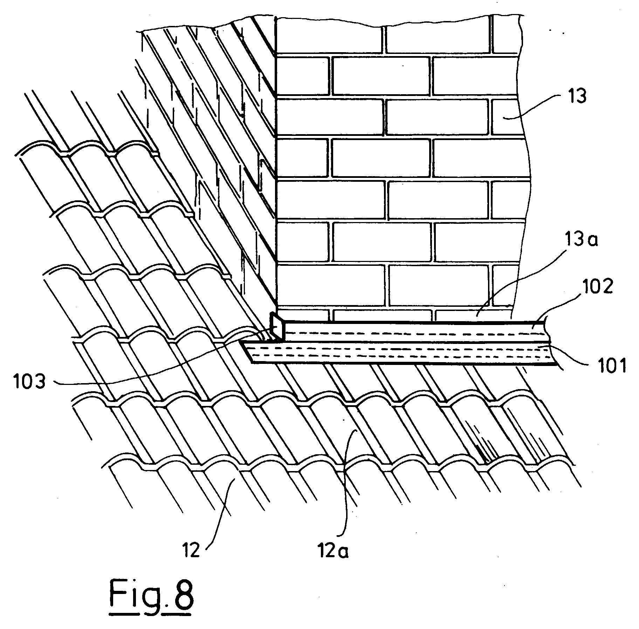

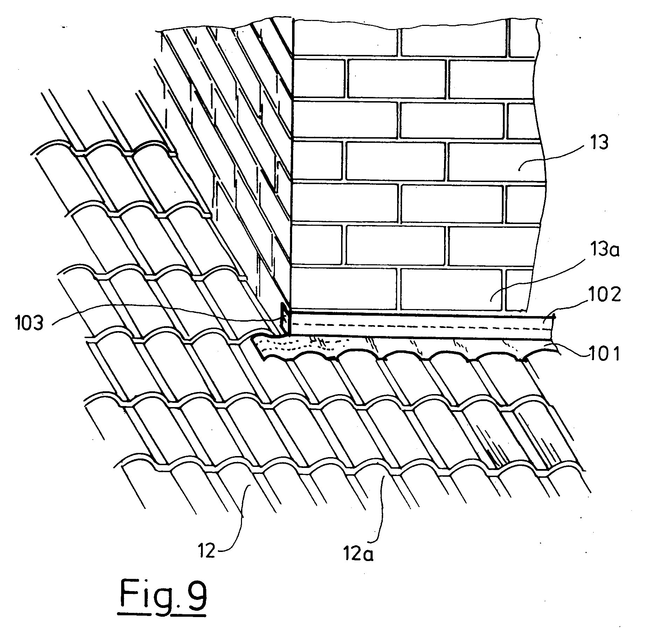

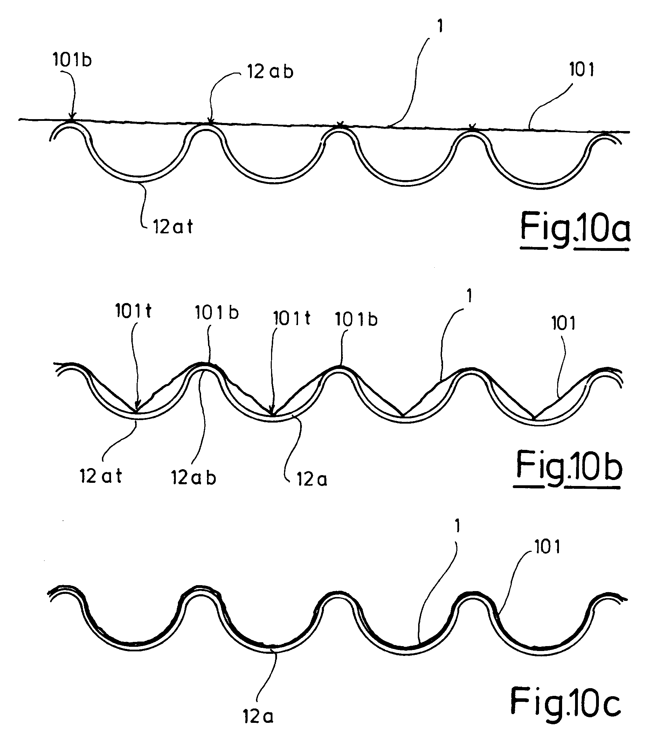

Wie dieser Aufklebevorgang von Fig. 8 zu Fig. 9 vonstatten geht, ist im Detail in den Fig. 10a bis 10c dargestellt.

Fig. 10a zeigt den Dachplattenabdeckstreifen 101 des Abdeckmaterials 1, nachdem die drei übrigen Schutzfolienbahnen abgezogen worden sind. Hierbei liegen Plattenbergauflageflächen 101b auf Dacheindeckungsplattenbergen 12ab der Fläche 12a der Dacheindeckungsplatten, während deren Dacheindeckungsplattentäler 12at von dem übrigen Dachplattenabdeckstreifen 101 nur überzogen sind.

Danach wird, wie Fig. 10b zeigt, der Dachplattenabdeckstreifen 101 jeweils auf den tiefsten Punkt der Dacheindeckungsplattentäler 12at so gedrückt, daß diese mit Plattentalauflageflächen 101t in den Tälern 12at anhaften und die übrigen Bögen der Flächen 12a der Dacheindeckungsplatten überspannen. Der Vorteil dieser Verlegungsmethode ist, daß das Strechfolienelement 2 jeweils gleich gereckt in die einzelnen Dacheindeckungsplattentäler 12at eingedrückt wird.

Abschließend wird mit der Hand oder einer Verlegehilfe der Dachplattenabdeckstreifen 101 vollständig auf die Flächen 12a der Dacheindeckungsplatten gedrückt. Da das Stretchfolienelement aufgrund seiner besonderen Verlegeeigenschaften in der einmal gereckten Lage verharrt, ist gesichert, daß die verbleibenden, äußerst geringen Rückstellkräfte des Stretchfolienelementes 2 die Kontaktebene 4 der Schicht 3 von der durch ein sehr markantes Relief geprägten Fläche 12a abzieht.

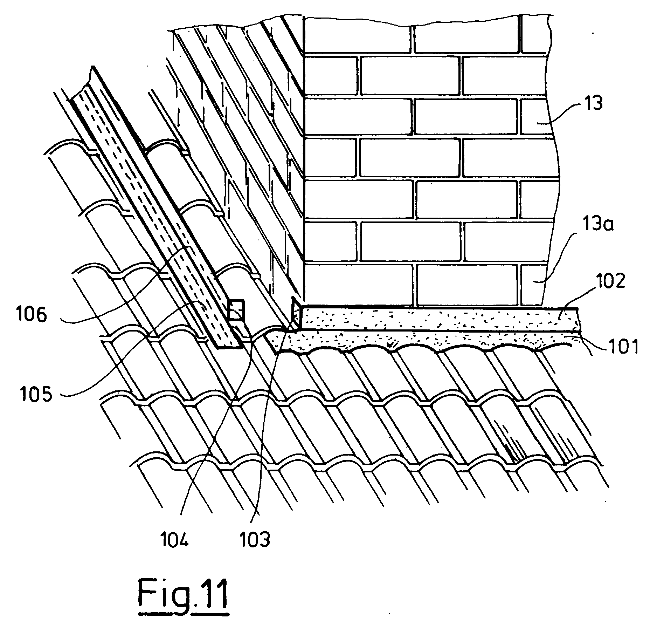

Sind der Dachplattenabdeckstreifen 101 und der Schornsteinabdeckstreifen 102 verlegt, wird anschließend, wie Fig. 11 zeigt, ein weiterer Dachplattenabdeckstreifen 105 und ein weiterer Schornsteinabdeckstreifen 106 im zugeschnittenen Zustand an die Fläche 13a und die Fläche 12a der Dacheindekkungsplatten 12 geklebt. Ein Schornsteineckstreifenstück 104 zu beiden Seiten des Schornsteinabdeckstreifens 106 ergibt sich, weil der Dachplattenabdeckstreifen 105 über den bereits verlegten Dachplattenabdeckstreifen 101 gelegt werden muß, um die erforderliche Dichtigkeit im Bereich des Spalts 14 zu sichern.

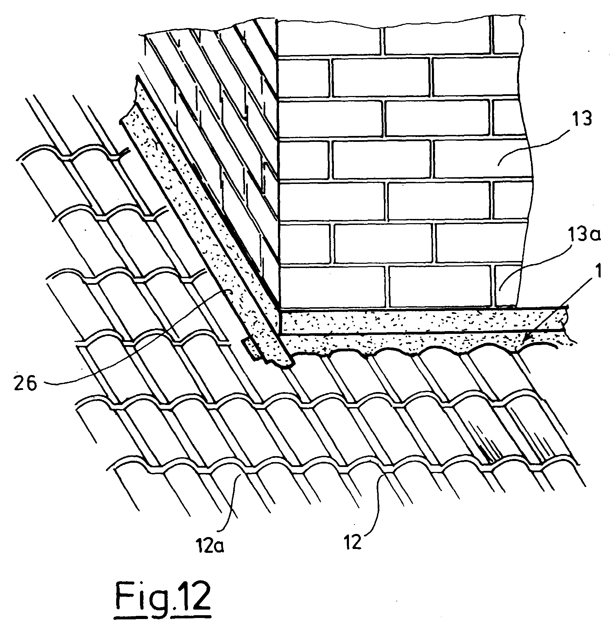

Wie Fig. 12 zeigt, kann das Schornsteineckstreifenstück 104 bündig abgeschnitten werden, so daß eine saubere, äußere Eckverbindung entsteht. Ebenso können die Dachplattenabdeckstreifen 101 und 105 so zugeschnitten werden, daß sie bündig gegeneinander abschließen. In Fig. 12 sind die Enden bewußt nicht vollständig zugeschnitten dargestellt, um den Überlappungsbereich besonders kenntlich zu machen. Wie Fig. 12 zeigt, ist das Verlegen des Dachplattenabdeckstreifens 105 wesentlich einfacher als die des Dachplattenabdeckstreifens 101.

Wesentlich schwieriger hingegen wird die Abdichtung des Spalts 14 im Bereich der nicht gestellten Schornsteinkehle. Hier sind durch den Dachplattenabdeckstreifen nicht nur die Berge und Täler des Reliefs der Flächen 12a der Dacheindekkungsplatten zu überbrücken, sondern auch der sehr enge Winkel zwischen den Dacheindeckungsplatten und dem Schornstein, der sich durch die jeweilige Dachneigung ergibt. Dadurch, daß das Abdeckmaterial 1 in alle Richtungen verform- und dehnbar ist, können diese äußerst schweren Anforderungen leichter gemeistert werden als bei Abdeckmaterialien aus Metall. Selbst wenn die Metallbahnen in Längsrichtung mäanderförmig und in Querrichtung durch weitere Prägungen vorgeformt sind, sind diese kaum in der Lage, den sehr kleinen Winkel zwischen Schornstein und Dach ohne Einreißen zu überbrücken.

Das Abdeckmaterial 1 hingegen ist in der Lage, daß eine Kontaktebene 4 sämtliche Bereiche der Flächen 12a und 13a abdichtend überdeckt und so den Spalt 14 sicher abdichtet.

Das Stretchfolienelement 2 ist durchscheinend, so daß das Abdeckmaterial 1 aufgrund der schwarzen Farbe des Einkomponenten-Kleb/Dichtstoffes 3 nach außen hin schwarz erscheint. Die Außenseite 2b des Stretchfolienelementes 2 läßt sich aber mit einer Farbe überstreichen, die der Farbe der Ziegel bzw. des Schornsteins entspricht. Möglich ist es natürlich auch, die Einkomponenten-Kleb/Dichtstoffschicht 3 und/oder das Stretchfolienelement 2 gleich so einzufärben, daß sie der jeweiligen Dachfarbe entsprechen. Die Außenseite 2b des Stretchfolienelements 2 stellt hierbei eine wirksame und widerstandsfähige Außenbeschichtung des Abdeckmaterials 1 dar.

### Bezugszeichenliste

- 1: Abdeckmaterial
- 2: Stretchfolienelement
- 2a: Innenseite des Stretchfolienelements
- 2b: Außenseite des Stretchfolienelement
- 3: Einkomponenten-Kleb-/Dichtstoffschicht
- 4: Kontaktebene
- 5: überdeckende Schicht
- 6.1, ... 6.5: Schutzfolienbahn
- 6a, 6b: Ränder der Schutzfolien
- 7, 8, 9, 10: Außenkanten des Stretchelements
- 11: Dachrahmen
- 11a: Fläche des Dachrahmens
- 12: Dacheindeckungsplatten
- 12a: Flächen der Dacheindeckungsplatten
- 12at: Dacheindeckungsplattental
- 12ab: Dacheindeckungsplattenberg
- 13: Kamin
- 13a: Fläche des Kamins
- 14: Spalt
- b: Breite
- D: Dicke des Abdeckmaterials
- D: Dicke des Stretchfolienelements
- 101: Dachplattenabdeckstreifen
- 101b: Plattenbergauflagefläche
- 101t: Plattentalauflagefläche
- 102: Schornsteinabdeckstreifen
- 103, 104: Schornsteineckstreifenstück
- 105: Dachplattenabdeckstreifen
- 106: Schornsteinabdeckstreifen

## Patentansprüche

1. Plastisch verformbares Abdeckmaterial, insbesondere für den Außenbereich von Bauwerken (11, 12, 13), in Bogen-, Bahn- oder Streifenform, bestehend aus
- einem abdeckenden Abschlußelement(2),
- einer selbstklebenden und verformbaren Schicht (3) aus einem Haftklebemittel auf Butylkautschukbasis, das auf einer Seite (2a) des Abschlußelements (2) angeordnet ist, und
- einer Schutzfolie (6.1, 6.2, 6.3, 6.4, 6.5), mit der eine Kontaktebene (4) der Schicht (3) abgedeckt ist, dadurch gekennzeichnet,
- daß die Schutzfolie als wenigstens eine Schutzfolienbahn (6.1, ..., 6.5) ausgebildet ist,
- daß auf die nebeneinander angeordneten und sich wenigstens teilweise überlappenden Schutzfolienbahnen (6.1, ..., 6.5) als Schicht eine festplastische Einkomponenten- Kleb/Dichtstoffschicht (3) auf Butylkatschukbasis aufgebracht ist,
- daß die Einkomponenten- Kleb/Dichtstoffschicht (3) auf Butylkautschukbasis mit einem Stretchfolienelement (2) als Abschlußelement überdeckt ist und
- daß das Stretchfolienelement (2), die Einkomponenten-Kleb/Dichtstoffschicht (3) und die Schutzfolienbahnen (6.1, ..., 6.5) verlegegerecht zuschneidbar, wenigstens eine der Schutzfolienbahnen (6.1, ..., 6.5) abzuziehen und die wenigstens teilweise freigelegte Kontaktebene (4) der Einkomponenten- Kleb/Dichtstoffschicht (3) auf wenigstens eine Fläche (11a, 12a, 13a) der Bauwerke (11, 12, 13) aufzulegen und über das Stretchfolienelement (2) reliefgenau anzudrücken ist.

2. Abdeckmaterial nach Anspruch 1, dadurch gekennzeichnet, daß die Dicke (D) des Abdeckmaterials (1) und die Dicke (d) des Stretchfolienelements (2) bei ein und demselben Abdeckmaterial (1) je für sich stets konstant sind.

3. Abdeckmaterial nach Anspruch 1 und 2, dadurch gekennzeichnet, daß das Stretchfolienelement (2) eine Dicke (d) von etwa 0,05 mm bis etwa 1,5 mm aufweist.

4. Abdeckmaterial nach einem der Ansprüche 1 bis 3, dadurch gekennzeichnet, daß das Stretchfolienelement (2) eine Dehnfähigkeit bis zu weit über 100 % und ein Rückstellvermögen von ca. ≤ 0,001 % hat.

5. Abdeckmaterial nach einem der Ansprüche 1 bis 4, dadurch gekennzeichnet, daß eine Innenseite (2a) als Seite des Stretchfolienelements (2) an wenigstens einer Außenkante (7, 8, 9, 10) bis zu einer Breite von je 0,01 bis 0,5 mm von der Einkomponenten-Kleb-Dichtstoffschicht (3) freigehalten ist.

6. Abdeckmaterial nach einem der Ansprüche 1 bis 5, dadurch gekennzeichnet, daß die Dehnbarkeit des Stretchfolienelements (2) derart auf die Zähigkeit der Einkomponenten-Kleb/Dichtstoffschicht (3) abgestimmt ist, daß das Abdeckmaterial (1) von Hand werkzeuglos dehnbar, biegbar sowie der jeweiligen Kontur der Einsatzfläche durch sonstige Verformung anpaßbar ist.

7. Abdeckmaterial nach einem der Ansprüche 1 bia 6, dadurch gekennzeichnet, daß die Schutzfolienbahnen (6.1, ...) eine Breite zwischen 1 cm und 10 cm haben.

8. Abdeckmaterial nach einem der Ansprüche 1 bis 7, dadurch gekennzeichnet, daß die Schutzfolienbahnen (6.1, ..., 6.5)) zur Abdeckung des Einkomponenten-Kleb/Dichtstoffes (2) wenigstens eine der Außenkanten (7, 8, 9, 10) des Stretchfolienelements (2) geringfügig überragen.

9. Abdeckmaterial nach einem der Ansprüche 1 bis 8, dadurch gekennzeichnet, daß die Schutzfolienbahnen als ein auf wenigtens einer Seite silikonbeschichtetes Papier oder eine Kunststoffolie ausgebildet sind.

10. Abdeckmaterial nach einem der Ansprüche 1 bis 9, dadurch gekennzeichnet, daß der Einkomponenten-Kleb/Dichtstoffschicht (3) auf Butylkautschukbasis folgende technische Daten aufweist:
Farbe: schwarz
Konsistenz: zäh-plastisch, klebend, weich
Dichte bei 20° C: ca. 1,26 g/cm³
Festkörpergehalt: 100 %
Penetration: ca. 65 1/10 mm
(Konus 150 g; 6 s; 20° C)
Klebkraft: sehr stark
Lackverfärbung: keine
Gebrauchstemperatur: -40° C bis +80° C
Temperaturstabilität: 200° C
(kurzfristig bis 1 h).

11. Abdeckmaterial nach einem der Ansprüche 1 bis 10, dadurch gekennzeichnet, daß das Stretchfolienelement (2) im wesentlichen durchscheinend ist und mit einer der Umgebungsfarbe des Einsatzbereiches entsprechenden Farbe einfärbbar oder bestreichbar ist.
